# EUROPÄISCHE PATENTSCHRIFT

(11) **EP 4 165 968 B1**
(45) Veröffentlichungstag und Bekanntmachung des Hinweises auf die Patenterteilung: **15.07.2026**
(21) Anmeldenummer: 22200310.5
(22) Anmeldetag: 07.10.2022
(51) Int. Cl.: A01C 7/12, A01C 19/02

(54) **DOSIERSYSTEM UND LANDWIRTSCHAFTLICHE VERTEILMASCHINE MIT DERARTIGEM DOSIERSYSTEM**
METERING SYSTEM AND AGRICULTURAL DISTRIBUTION MACHINE WITH SUCH A METERING SYSTEM
SYSTÈME DE DOSAGE ET MACHINE DE DISTRIBUTION AGRICOLE DOTÉE D'UN TEL SYSTÈME DE DOSAGE

(30) Priorität: 14.10.2021 DE 102021126671
(43) Veröffentlichungstag der Anmeldung: 19.04.2023
(73) Patentinhaber: Horsch Maschinen SE & Co. KG, 92421 Schwandorf (DE)
(72) Erfinder: PIRKENSEER, Michael, 92421 Schwandorf (DE)
(74) Vertreter: v. Bezold & Partner Patentanwälte - PartG mbB

(56) Entgegenhaltungen:
- EP-A1- 3 643 155
- EP-B1- 0 678 233
- WO-A1-2016/164951
- WO-A1-2019/157094
- DE-A1- 102018 131 069
- US-A1- 2017 196 162

## Beschreibung

### BESCHREIBUNG

Die Erfindung betrifft ein Dosiersystem zum Dosieren von Dosiergut für eine landwirtschaftliche Verteilmaschine, insbesondere für eine Saatmaschine oder einen Düngerstreuer. Die Erfindung betrifft zudem vorzugsweise eine landwirtschaftliche Verteilmaschine, vorzugsweise Saatmaschine oder Düngerstreuer, mit einem derartigen Dosiersystem.

Zum Stand der Technik kann zunächst verwiesen werden auf die WO 2016/164951 A1, die eine Sämaschine für die Landwirtschaft offenbart, insbesondere als Aufsatz für ein Bodenbearbeitungsgerät, zum pneumatischen Verteilen von Saatkörnern bzw. von Dünger-/Pflanzenschutzmitteln, mit mindestens einem Vorratsbehälter, der bodenseitig ein schlitzartiges Mundstück quer zur Fahrtrichtung aufweist, welchem zwei auf gemeinsamer geometrischer Achse hintereinander liegende Säwalzen mit parallelen Zellenrädern zugeordnet sind, wobei die Zellenräder der einen Säwalze auf einer Hohlwelle und jene der anderen Säwalze auf einer die Hohlwelle durchgreifenden Kernwelle formschlüssig angeordnet sind und Kammern eines Abgangkastens an eine oder mehrere Zellenräder anschließen, sowie Schläuche aus den Kammern zu einem Prallteller bei Verteilung über eine Bodenfläche oder zu einer Säschar zur Einbringung in den Boden führen, wobei die Hohlwelle und die Kernwelle an der einen Längsseite der Sämaschine zur Einstellung individueller Durchsatzmengen bzw. Mischungsverhältnisse über getrennt regelbare Elektromotoren als Antriebe verfügen und die Hohlwelle sowie die Kernwelle von den Elektromotoren bzw. von diesen nachgeordneten Getrieben abkuppelbar und von der gegenüber liegenden, antriebslosen Längsseite der Sämaschine aus axial abziehbar und austauschbar sind.

Um landwirtschaftliche Dosiergüter, wie Saatgut, Dünger oder dergl. in einer gewünschten Menge auf einer landwirtschaftlichen Ackerfläche auszubringen, ist es erforderlich, diese in gewünschten Mengen zu Dosieren. Zur Dosierung der Dosiergüter sind aus dem Stand der Technik bereits Dosiersysteme bekannt geworden. Insbesondere volumetrische Dosiersysteme werden häufig eingesetzt. Bei derartigen Dosiersystemen wird das Verteilgut in der Regel mittels einer Zellenradschleuse in volumetrischer Weise dosiert, anschließend bspw. mittels einer Verteileinheit verteilt sowie jeweils mittels eines Säschares in eine durch das Säschar erzeugte Saatfurche abgelegt.

Ein derartiges Dosiersystem ist aus dem Stand der Technik bspw. durch die DE 10 2018 131 069 A1 bereits bekannt geworden. Um eine Flexibilität bei der Verteilung des Dosiergut zu erreichen ist vorgesehen, dass die Zellenradschleuse eine rotierende Zellenwalze umfasst, die zumindest zweigeteilt ist, wobei jeder der zwei Abschnitte der rotierenden Zellenwalze in eine separate Verbindungsleitung eines zu zwei oder mehr Verteileinheiten führenden Leitungssystems münden kann. Da die Antriebsmotoren für die jeweiligen Abschnitte, jeweils an gegenüberliegenden Seiten des Gehäuses der Zellenradschleuse montiert sind, ist eine Erweiterung um bspw. weitere Abschnitte, um somit die Flexibilität noch weiter erhöhen zu können, nicht möglich.

Aufgabe der Erfindung ist es somit, die beschriebenen Nachteile des Standes der Technik zu beseitigen. Insbesondere soll ein Dosiersystem zum Dosieren von Dosiergut geschaffen werden mit dem, bei einem einfachen Aufbau, eine größtmögliche Flexibilität erreichbar ist.

Diese Aufgaben werden gelöst durch ein Dosiersystem zum Dosieren von Dosiergut mit den Merkmalen des unabhängigen Anspruch 1, sowie durch eine landwirtschaftliche Verteilmaschine mit den Merkmalen des Anspruchs 15. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird ein Dosiersystem zum Dosieren von Dosiergut (z.B. körniges, respektive granulares Saatgut oder Dünger) für eine landwirtschaftliche Verteilmaschine, insbesondere eine Saatmaschine (z.B. zur vorzugsweisen Drillsaat) oder einen Düngerstreuer (z.B. pneumatischer Düngerstreuer) bereitgestellt.

Das Dosiersystem umfasst eine Dosiereinrichtung, mit zumindest einem Gehäuse, einem innerhalb des Gehäuses rotierenden Zellenrotor, sowie mit zumindest einer (vorzugsweise zwei oder mehr), am Gehäuse montierten, den Zellenrotor antreibenden Antriebseinheit.

Die Dosiereinrichtung, das heißt das Gehäuse und der Zellenrotor, bilden zweckmäßig eine Zellenradschleuse und sind zur volumetrischen Dosierung des Dosierguts eingerichtet.

Das Dosiersystem umfasst zudem eine, der Dosiereinrichtung stromabwärts (d.h. bezogen auf die Flussrichtung des Dosiergut) nachgelagerte, Fallschleuse.

Um ein Dosiersystem zum Dosieren von Dosiergut zu schaffen mit dem, bei einem einfachen Aufbau eine größtmögliche Flexibilität erreicht werden kann ist vorgesehen, dass der Zellenrotor zumindest einen Rotorabschnitt mit zumindest zwei, jeweils mittels eines separaten Antriebes (z.B. Elektromotor, Hydraulikmotor und/oder dergl.) der Antriebseinheit unabhängig voneinander betreibbare, zueinander konzentrische Rotorsegmente umfasst und wobei die Antriebe im Wesentlichen parallel zueinander gelagert sind und/oder wobei die Antriebe in einem Winkel zueinander gelagert sind.

Infolge der erfindungsgemäßen Maßnahmen können somit jeweils Rotorsegmente unabhängig voneinander in beliebiger Weise aktiviert oder deaktiviert und/oder deren Drehzahlen in beliebiger Weise verändert, vorzugsweise gesteuert, werden.

Um die Flexibilität bei einem einfachen Aufbau noch weiter zu verbessern ist es gemäß einer Weiterbildung der Erfindung möglich, dass der Zellenrotor zumindest zwei Rotorabschnitte mit jeweils zumindest zwei unabhängig voneinander betreibbaren, zueinander konzentrische Rotorsegmente umfasst.

Die Rotorabschnitte und/oder die Rotorsegmente, respektive einige Rotorsegmente, können jeweils gleich breit und/oder unterschiedlich breit sein.

Es ist möglich, dass die Dosiereinrichtung zwei Antriebseinheiten mit jeweils zwei Antrieben umfasst, vorzugsweise jeweils eine Antriebseinheit für jeweils einen Rotorabschnitt umfasst. Um hierbei dennoch einen einfachen Aufbau der Dosiereinrichtung zu erreichen, ist es möglich, dass jeweils ein Antrieb mit einem Rotorsegment antriebstechnisch gekoppelt ist und/oder die Antriebseinheiten gegenüberliegend zueinander am Gehäuse gelagert sind und/oder zumindest zwei Antriebe der zwei Antriebseinheiten konzentrisch zueinander gelagert sind.

Zumindest ein Antrieb der Antriebseinheit kann konzentrisch zu zumindest einem Rotorsegment gelagert sein und zumindest ein Antrieb der Antriebseinheit kann nicht koaxial zu zumindest einem Rotorsegment gelagert sein, wobei eine nicht koaxiale Anordnung bspw. durch eine nebeneinanderliegende Anordnung der Antriebseinheiten erreicht werden kann.

Es ist zweckmäßig möglich, dass die Antriebe einer Antriebseinheit jeweils auf der gleichen Seite des Gehäuses montiert sind. Somit kann bspw. ein Wechsel der Rotorabschnitte erleichtert werden.

Die zumindest zwei Rotorsegmente eines Rotorabschnittes sind auf einer gemeinsamen ersten Kupplungsbuchse gelagert, wodurch wiederum ein Wechsel erleichtert wird.

Ein einfacher Aufbau des Zellenrotors kann insbesondere erreicht werden, indem der Zellenrotor zumindest zwei Rotorabschnitte umfasst und die Rotorabschnitte jeweils mittels der, eine Tragewelle zumindest abschnittweise, vorzugsweise vollständig umgebenden ersten Kupplungsbuchse auf der Tragewelle gelagert sind und/oder vorzugsweise beidseitig mittels Sicherungselementen (z.B. Sicherungsring, Spannstift, Mutter und/oder dergl.) gegen axiale Bewegungen gegenüber der Tragewelle gesichert sind.

Alternativ oder ergänzend ist es möglich, dass die erste Kupplungsbuchse mittels einer Lagerung frei rotierend auf der Tragewelle gelagert ist. Wobei die Lagerung durch zumindest ein Gleitlager (z.B. eine oder mehrere Lagerbuchsen) gebildet sein kann.

Erfindungsgemäß ist vorgesehen, dass zumindest ein Rotorsegment mit der ersten Kupplungsbuchse mittelbar und/oder unmittelbar antriebstechnisch gekoppelt ist und zumindest ein Rotorsegment mit einer zweiten Kupplungsbuchse mittelbar und/oder unmittelbar antriebstechnisch gekoppelt ist, und vorzugsweise wobei die erste Kupplungsbuchse und die zweite Kupplungsbuchse konzentrisch zueinander gelagert sind. Wobei die zweite Kupplungsbuchse die erste Kupplungsbuchse zumindest abschnittweise umgibt, vorzugsweise vollständig umgibt.

Zweckmäßig kann vorgesehen sein, dass die zweite Kupplungsbuchse die erste Kupplungsbuchse frei drehend umgibt und/oder die zweite Kupplungsbuchse mittels einer Buchsenlagerung frei rotierend auf der ersten Kupplungsbuchse gelagert ist. Wobei die Lagerung, durch zumindest ein Gleitlager (z.B. eine oder mehrere Lagerbuchsen) gebildet sein kann.

Das Dosiersystem kann vorsehen, dass die zwei Rotorsegmente eines Rotorabschnitt die erste Kupplungsbuchse und/oder die zweite Kupplungsbuchse umgeben, vorzugsweise ein Rotorsegment die erste Kupplungsbuchse und die zweite Kupplungsbuchse vollständig umgibt und ein Rotorsegment ausschließlich die erste Kupplungsbuchse oder die zweite Kupplungsbuchse vollständig umgibt.

Zur mittelbaren antriebtechnischen Koppelung der ersten Kupplungsbuchse mit dem Rotorsegment und/oder der zweiten Kupplungsbuchse mit dem Rotorsegment ist erfindungsgemäß eine Übertragungshülse vorgesehen. Wobei die Übertragungshülse zweckmäßig die erste Kupplungsbuchse und/oder die zweite Kupplungsbuches umgibt, vorzugsweise vollständig umgibt. Wobei die Übertragungshülse zweckmäßig wiederum von einem Rotorsegment umgeben ist, vorzugsweise vollständig umgeben ist. Die Übertragungshülse ist insbesondere eingerichtet, respektive insbesondere derartig angeordnet, eine identische Drehrichtung der ersten Kupplungsbuchse auf das Rotorsegment zu übertragen und/oder eine identische Drehrichtung der zweiten Kupplungsbuchse auf das Rotorsegment zu übertragen.

Eine antriebstechnische Koppelung erfolgt insbesondere mittels einer Kraftschlussverbindung (z.B. durch entsprechende Passungen, Pressverbände oder Schraubverbindungen und/oder dergl.) und/oder einer Formschlussverbindung (z.B. durch entsprechend geformte oder ausgebildete, jeweils korrespondierende Bauteile). Vorzugsweise ist es möglich, dass eine antriebstechnische Koppelung, vorzugsweise eine identische Bewegungsübertragung der ersten Kupplungsbuchse mit einem Rotorsegment und/oder der ersten Kupplungsbuchse mit der Übertragungshülse und/oder der zweiten Kupplungsbuchse mit einem Rotorsegment und/oder der zweiten Kupplungsbuchse mit der Übertragungshülse und/oder der Übertragungshülse mit einem Rotorsegment mittels einer Kraftschlussverbindung und/oder einer Formschlussverbindung erfolgt, vorzugsweise einer Formschlussverbindung erfolgt.

Vorzugsweise kann eine Formschlussverbindung durch jeweils korrespondierende Mehrflächenprofilierungen (z.B. im Wesentlichen Dreikant-, Vierkant-, Fünfkant-, Sechskantprofile und/oder Polygonprofile und/oder Verzahnungen und/oder dergl.) erfolgen.

Es sei angemerkt, dass im Kontext der Erfindung die Durchmesserangabe der Mehrflächenprofilierung sich jeweils auf einen Teilkreisdurchmesser bezieht, der sich jeweils zwischen einem maximalen Aussendurchmesser und einem minimalen Innendurchmesser sich befindet.

Zur Dosierung des Dosiergut, zweckmäßig zur Aufnahme und Dosierung einer definierten Menge an Dosiergut weisen die Rotorsegmente eine im Wesentlichen identische Umfangsfläche auf und eine, vorzugsweise identische durch eine Mehrflächenprofilierung gebildete, Innenfläche mit insbesondere identischem Durchmesser auf.

Insbesondere ist es möglich, dass die Rotorabschnitte und/oder Rotorsegmente jeweils im wesentlichen identische Umfangsflächen mit vorzugsweise im wesentlichen identischen Öffnungsgrößen zur Aufnahme und Weiterleitung von Dosiergut aufweisen. Wobei die Umfangsflächen auch durch verschiedene Öffnungsgrößen gebildet sein können.

Vorzugsweise ist es möglich, dass die Innenfläche zur Schaffung einer Formschlussverbindung zumindest abschnittweise durch eine Mehrflächenprofilierung gebildet ist, die jeweils korrespondierend ist zu einer, wiederum durch eine zumindest abschnittweise durch eine Mehrflächenprofilierung gebildeten Mantelfläche der ersten Kupplungsbuchse und/oder Mantelfläche der zweiten Kupplungsbuchse und/oder Mantelfläche der Übertragungshülse.

Gemäß einer Weitebildung der Erfindung kann vorgesehen sein, dass die Innenkontur der Übertragungshülse zur vorzugsweisen Schaffung einer Formschlussverbindung zumindest abschnittweise durch eine Mehrflächenprofilierung gebildet ist, die jeweils korrespondierend ist zu einer, wiederum durch eine zumindest abschnittweise durch eine Mehrflächenprofilierung gebildeten Mantelfläche der ersten Kupplungsbuchse und/oder Mantelfläche der zweiten Kupplungsbuchse.

Es kann vorgesehen sein, dass die Mantelfläche der ersten Kupplungsbuchse und/oder die Mantelfläche der zweiten Kupplungsbuchse und/oder die Mantelfläche der Übertragungshülse und/oder die Innenfläche der Rotorsegmente einen im wesentlichen identischen Durchmesser aufweisen. Somit kann eine einfache Montage erreicht und der Anteil an Gleichteilen erhöht werden.

Eine bevorzugte Ausführungsvariante der Antriebseinheit kann vorsehen, dass die Antriebseinheit zumindest zwei motorische Antriebe umfasst, wobei die zwei Antriebe im Betrieb der Dosiereinrichtung unterschiedliche Drehrichtungen zueinander aufweisen und/oder im Wesentlichen identische oder unterschiedliche Drehzahlen zueinander aufweisen. Wobei somit eine dosierte Menge an Dosiergut steuerbar und/oder regelbar ist und wobei die Drehrichtungen und/oder Drehzahlen der Antriebe mit einer Steuereinrichtung steuerbar und/oder regelbar sind.

Die Dosiereinrichtung kann zwei Antriebseinheiten mit jeweils zwei Antrieben umfassen, wobei die Antriebseinheiten gegenüberliegend zueinander am Gehäuse gelagert sein können und/oder wobei zumindest zwei Antriebe der zwei Antriebseinheiten konzentrisch gelagert sind und wobei zumindest zwei, konzentrisch zueinander auf gegenüberliegenden Seiten des Gehäuse gelagerte Antriebe im Betrieb der Dosiereinrichtung unterschiedliche Drehrichtungen zueinander aufweisen und/oder unterschiedliche oder im wesentlichen identische Drehzahlen aufweisen. Somit wird durch die verschiedenen Drehrichtungen erreicht, dass vorzugsweise alle Rotorsegmente die gleiche Drehrichtung während der Dosierung des Dosiergut aufweisen.

Die Antriebseinheit umfasst vorzugsweise zwei Antriebe, sowie eine erste Antriebskupplung und eine zweite Antriebskupplung, wobei die erste Antriebskupplung und die zweite Antriebskupplung jeweils antriebstechnisch mit einem Antrieb gekoppelt sind. Wobei zweckmäßig die erste Antriebskupplung und die zweite Antriebskupplung konzentrisch zueinander gelagert sind und/oder die zweite Antriebskupplung die erste Antriebskupplung zumindest abschnittweise umgibt, vorzugsweise vollständig umgibt.

Alternativ oder ergänzend ist es möglich, dass die zweite Antriebskupplung die erste Antriebskupplung frei drehend umgibt und/oder die zweite Antriebskupplung mittels einer Antriebslagerung (z.B. gebildet durch Gleitlager, Kugellager oder dergl.) frei rotierend auf der ersten Antriebskupplung gelagert ist.

Die zweite Antriebskupplung kann mittels eines Zwischenglieds (z.B. gebildet durch ein Zahnrad) antriebstechnisch mit einem Antrieb gekoppelt sein, vorzugsweise derartig antriebstechnisch gekoppelt sein, dass zwischen dem Zwischenglied und der zweiten Antriebskupplung eine Drehrichtungsumkehr und/oder eine Drehzahlerhöhung oder Drehzahlreduzierung durchgeführt wird. Das Zwischenglied kann somit zweckmäßig ein Stirnradgetriebe bilden.

Zur Antriebsübertragung kann gemäß einer Ausführungsvariante der Erfindung vorgesehen sein, dass die erste Antriebskupplung mit der ersten Kupplungsbuchse und die zweite Antriebskupplung mit der zweiten Kupplungsbuchse antriebstechnisch gekoppelt ist, vorzugsweise jeweils konzentrisch zueinander gekoppelt sind. Die Koppelung kann hierbei bspw. durch eine Formschlussverbindung erfolgen, insbesondere durch eine durch jeweils korrespondierende Mehrflächenprofilierungen gebildete Formschlussverbindung erfolgen, wobei die erste Antriebskupplung und die erste Kupplungsbuchse sowie die zweite Antriebskupplung und die zweite Kupplungsbuchse jeweils zueinander identische Durchmesser aufweisende Mehrflächenprofilierungen aufweisen und wobei die erste Antriebskupplung und die zweite Antriebskupplung jeweils verschiedene Durchmesser aufweisende Mehrflächenprofilierungen aufweisen.

Die zumindest zwei Antriebe können an einem gemeinsamen Antriebsgehäuse angebaut sein und die erste Antriebskupplung, die zweite Antriebskupplung und das Zwischenglied können drehbar im Antriebsgehäuse angeordnet und/oder gelagert sein. Das Antriebsgehäuse kann zudem Bestandteil des Gehäuses der Dosiereinrichtung sein, d.h. ein integrierter Bestandteil des Gehäuses sein oder an diesem montiert sein.

Eine erfindungsgemäße Fallschleuse kann zumindest eine Einlassöffnung aufweisen, vorzugsweise eine identische Anzahl an Einlassöffnungen wie unabhängig voneinander betreibbare Rotorsegmente aufweisen, wobei jede Einlassöffnung mit vorzugsweise zwei Förderleitungen wirktechnisch verbunden sein kann. Alternativ oder ergänzend kann die Fallschleuse zumindest eine Steuerklappe, vorzugsweise zumindest zwei Steuerklappen aufweisen, welche eingerichtet sind, dass durch die Einlassöffnung dosierte Dosiergut wahlweise in Richtung von einer Förderleitung oder in Richtung von zwei Förderleitungen zu leiten.

Es ist möglich, dass zumindest ein Antrieb z. B. im Wesentlichen parallel und/oder im Wesentlichen koaxial zur Rotationsachse des Zellenrotors ausgerichtet ist und/oder zumindest ein Antrieb winklig (z. B. im Wesentlichen orthogonal) zur Rotationsachse des Zellenrotors ausgerichtet ist.

Es ist möglich, dass zumindest zwei Antriebe im Wesentlichen parallel zueinander gelagert sind und/oder zumindest zwei Antriebe in einem Winkel zueinander gelagert sind.

Im Kontext der Erfindung umfasst die Definition "zumindest teilweise umgebend" insbesondere eine Überlagerung der Bauteile mit deren jeweiligen Durchmessern, d.h. insbesondere eine Lagerung im inneren eines Durchmessers des jeweiligen Bauteils, zumindest abschnittweise über dessen Breite vorzugsweise über deren gesamter Breite.

Zur Ansteuerung der Antriebe kann eine Steuereinrichtung vorgesehen sein, wobei die Steuereinrichtung bspw. eine Rechnereinheit, einen Bordcomputer und/oder dergl. aufweisen kann und zudem einen Steuer- und/oder Regelkreis, insbesondere einen hydraulischen und/oder pneumatischen und/oder elektrischen Steuer- und/oder Regelkreis umfassen kann, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Zur Vermeidung von Wiederholungen sei darauf hingewiesen, dass die erfindungsgemäßen Ausführungsformen und Merkmale in beliebiger Weise und Frei mit dem Dosiersystem und/oder der landwirtschaftlichen Verteilmaschine kombinierbar sind. Dementsprechend sind alle Ausführungsformen und erfindungsgemäßen Merkmale sowohl für das Dosiersystem als auch für die landwirtschaftliche Verteilmaschine offenbart und beanspruchbar.

Gemäß einem weiteren Aspekt der Erfindung wird eine landwirtschaftliche Verteilmaschine, vorzugsweise eine Saatmaschine oder ein Düngerstreuer bereitgestellt. Die Verteilmaschine umfasst zumindest ein Dosiersystem wie in diesem Dokument beschrieben, insbesondere ein Dosiersystem nach zumindest einem Patentansprüche 1 bis 14. Das Dosiersystem ist mittels Förderleitungen und einem mit einem pneumatischen Luftdruck beaufschlagbaren Leitungssystem mit zumindest einem Verteilerturm zur Verteilung des Dosiergut auf eine Vielzahl von Säscharen wirktechnisch verbunden und die Säschare sind eingerichtet, dass Dosiergut in einer Bodenfläche abzulegen.

Alternativ oder ergänzend ist es möglich, dass die Verteilmaschine zumindest zwei Vorratsbehälter für landwirtschaftliches Dosiergut, zumindest zwei Dosiersysteme und zwei Verteilertürme, welche jeweils mit einem Leitungssystem mit zumindest einem, vorzugsweise zwei Dosiersystemen verbunden sind, aufweist.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Ausführungsvariante einer landwirtschaftlichen Verteilmaschine, in Form einer Saatmaschine, mit zwei Dosiersystemen,
- Figur 2A: eine Perspektivansicht einer Ausführungsvariante eines Dosiersystem, mit einer Dosiereinrichtung mit einem Gehäuse, einem Zellenrotor, zwei Antriebseinheiten und einer Fallschleuse,
- Figur 2B: eine Perspektivansicht des Dosiersystem gemäß der Figur 2A mit ausgeblendetem Gehäuse,
- Figur 2C: eine Vorderansicht des Dosiersystem gemäß der Figur 2B,
- Figur 2D: eine Perspektivansicht des Dosiersystem gemäß der Figur 2A, wobei der Zellenrotor und eine Antriebseinheit demontiert sind,
- Figur 3A: eine Perspektivansicht eines Zellenrotor, wobei Teile davon im Schnitt dargestellt sind,
- Figur 3B: eine Perspektivansicht eines Zellenrotor gemäß der Figur 3A, wobei dieser entlang von dessen gesamten Erstreckung im Schnitt dargestellt ist,
- Figur 3C: eine Vorderansicht des Zellenrotor gemäß der Figur 3B,
- Figur 3D: eine Perspektivansicht der Komponenten zum Antreiben der Rotorsegmente,
- Figur 3E: eine Perspektivansicht der Komponenten gemäß der Figur 3 wobei einige Komponenten im Schnitt dargestellt sind,
- Figur 3F: eine Perspektivansicht der Komponenten gemäß der Figur 3 wobei einige Komponenten im Schnitt dargestellt sind,
- Figur 4A: eine perspektive Explosionsdarstellung einer Ausführungsvariante einer Antriebseinheit,
- Figur 4B: eine Perspektive Ansicht einer Antriebseinheit gemäß der Figur 4A, wobei einige Komponenten im Schnitt dargestellt sind,
- Figur 4C: eine Draufsicht einer Antriebseinheit gemäß der Figur 4B,
- Figur 5A: eine Perspektivansicht einer Ausführungsvariante einer Dosiereinrichtung mit zwei Antrieben,
- Figur 5B: eine Schnittdarstellung eines Zellenrotor wie er bei der Dosiereinrichtung gemäß der Figur 5A eingesetzt werden kann,
- Figur 6A: eine Perspektivansicht einer anderen Ausführungsvariante einer Dosiereinrichtung mit Antrieben, und
- Figur 6B: eine Perspektivansicht einer wiederum anderen Ausführungsvariante einer Dosiereinrichtung mit Antrieben.

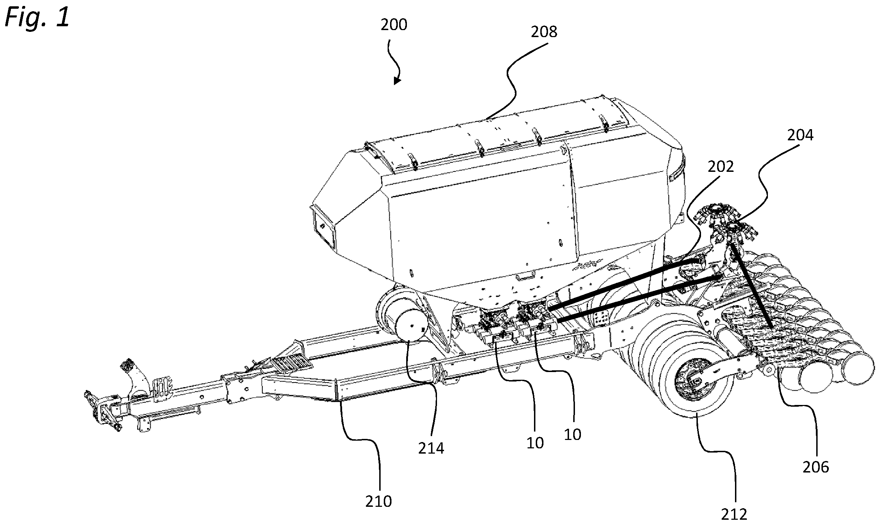

Die in den Figuren 1 bis 6 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt eine Ausführungsvariante einer landwirtschaftlichen Verteilmaschine 200 in Form einer Saatmaschine. Die Verteilmaschine 200 ist als eine mittels eines Zugfahrzeug (hier nicht dargestellt) gezogene Maschine ausgeführt, könnte jedoch auch eine selbstfahrende (z.B. auch autonome Verteilmaschine 200) Verteilmaschine 200 sein, aber auch eine, an ein Zugfahrzeug angebaute Verteilmaschine 200 wäre denkbar.

Die Verteilmaschine 200 könnte alternativ oder ergänzend auch ein Düngerstreuer sein, vorzugsweise ein pneumatischer Düngerstreuer sein.

Die Verteilmaschine 200 dient jeweils zur Verteilung von Dosiergut (z.B. Saatgut, Dünger oder dergl.) in einer gewünschten Menge je Fläche auf einer landwirtschaftlichen Fläche.

Die Verteilmaschine 200 umfasst eine Rahmenkonstruktion 210 mit einem Fahrwerk 212 in Form einer Packerwalze. Zur Ablage des Dosiergut in einer Bodenfläche umfasst die Verteilmaschine 200 zweckmäßig eine Vielzahl von quer zur Vortriebsrichtung der Verteilmaschine beabstandet zueinander angeordnete Säschare (z.B. Scheibenschare, Zinkenschare und/oder dergl.)

Zum Mitführen und Bereitstellen des jeweiligen Dosiergut umfasst die Verteilmaschine 200 einen Vorratsbehälter 208. Auch könnte die Verteilmaschine mehrere Vorratsbehälter 208 aufweisen.

Zur Dosierung des Dosiergut in einer geforderten Menge je Fläche umfasst die Verteilmaschine 200 zumindest ein Dosiersystem 10, gemäß dem Ausführungsbeispiel zwei Dosiersysteme 10 wie in diesem Dokument beschrieben, insbesondere gemäß zumindest einem der Patentansprüche 1 bis 16.

Das zumindest eine Dosiersystem 10 insbesondere die Förderleitungen 154 sind mit einem, mit pneumatischem Luftdruck (z.B. erzeugt durch ein Gebläse 214) beaufschlagbaren, Leitungssystem 202 (wobei hier zur besseren Übersicht nur einzelne Leitungen des Leitungssystem 202 dargestellt sind) mit zumindest einem Verteilerturm 204 zur Verteilung des Dosiergut auf eine Vielzahl von Säscharen 206 wirktechnisch verbunden. Insbesondere ist gemäß der Ausführungsbeispiele vorgesehen, dass die Verteilmaschine 200 zumindest zwei Vorratsbehälter (z.B. gebildet durch zwei, hier nicht dargestellte Kammern im Vorratsbehälter 208) für landwirtschaftliches Dosiergut, zumindest zwei Dosiersysteme 10 und zwei Verteilertürme 204, welche jeweils mit einem Leitungssystem 202 mit zumindest einem, vorzugsweise zwei Dosiersystemen 10 verbunden sind aufweist.

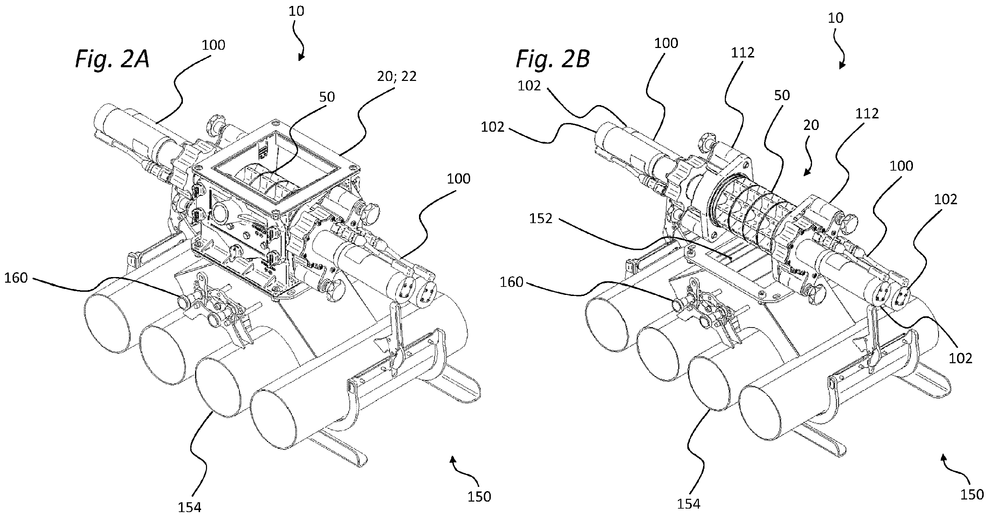

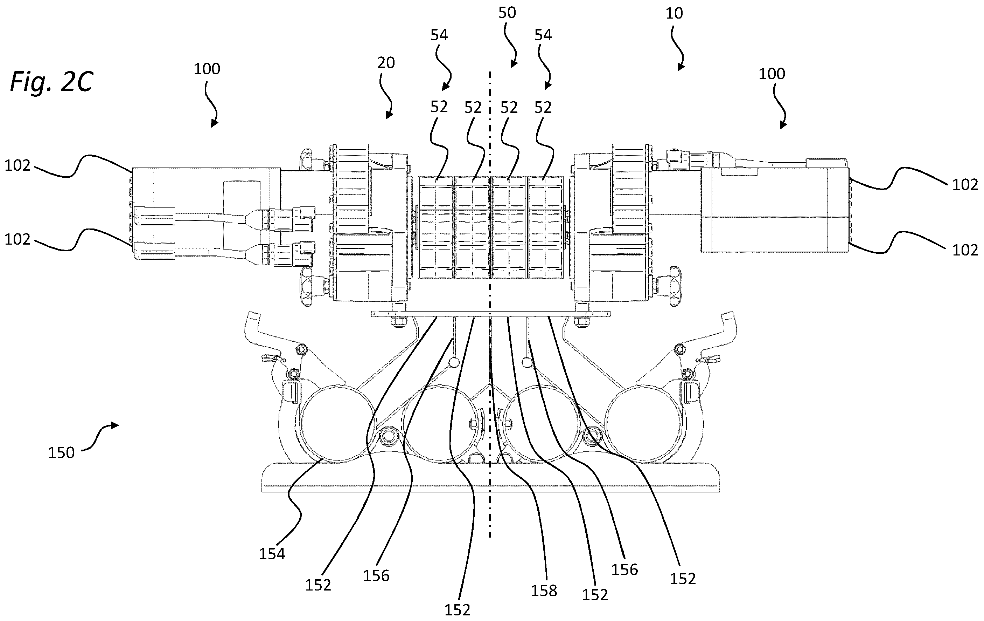

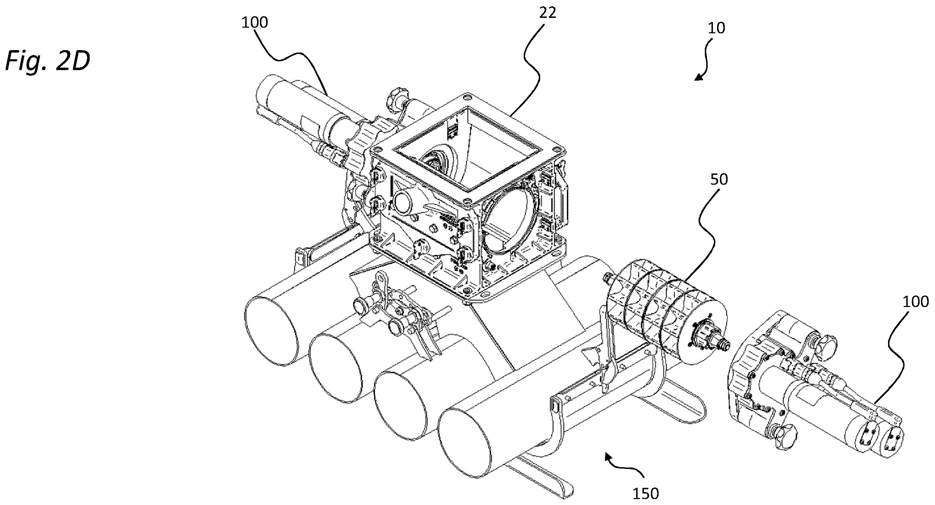

Die Figuren 2 zeigen jeweils Ansichten einer Ausführungsvariante eines erfindungsgemäßen Dosiersystem 10. Wobei die Figur 2A hierbei eine Perspektivansicht einer Ausführungsvariante des Dosiersystem 10, mit einer Dosiereinrichtung 20, mit einem Gehäuse 22, einem Zellenrotor 50, zwei Antriebseinheiten 100 und einer Fallschleuse 150 zeigt. Die Figur 2B zeigt zudem eine Perspektivansicht des Dosiersystem 10 gemäß der Figur 2A mit ausgeblendetem Gehäuse 22, die Figur 2C zeigt eine Vorderansicht des Dosiersystem 10 gemäß der Figur 2B und die Figur 2D eine Perspektivansicht des Dosiersystem 10 gemäß der Figur 2A, wobei der Zellenrotor 50 und eine Antriebseinheit 100 demontiert sind, wodurch gemäß der Figur 2D ein Wechsel des Zellenrotors durch eine Demontage der Antriebseinheit 100 ermöglicht wird.

Wie zudem aus der Figur 2C hervorgeht, ist das Dosiersystem 10 im Wesentlichen, d.h. insbesondere der Zellenrotor 50 und die Fallschleuse 150 mittelsymmetrisch aufgebaut.

Das Dosiersystem 10 dient zum Dosieren von Dosiergut und wird bspw. in einer landwirtschaftlichen Verteilmaschine 200, wie bspw. einer Saatmaschine oder einem Düngerstreuer eingesetzt.

Das Dosiersystem 10 umfasst eine Dosiereinrichtung 20 mit zumindest einem Gehäuse, einem innerhalb des Gehäuse 22 rotierenden Zellenrotor 50, sowie mit zumindest einer, am Gehäuse 22 montierten, den Zellenrotor 50 antreibenden Antriebseinheit 100. Zur Weiterleitung des Dosierguts von der Dosiereinrichtung 20 bspw. in Richtung zu Säscharen ist der Dosiereinrichtung 20 stromabwärts (bezogen auf die Flussrichtung des Dosiergut) eine Fallschleuse 150 nachgelagert.

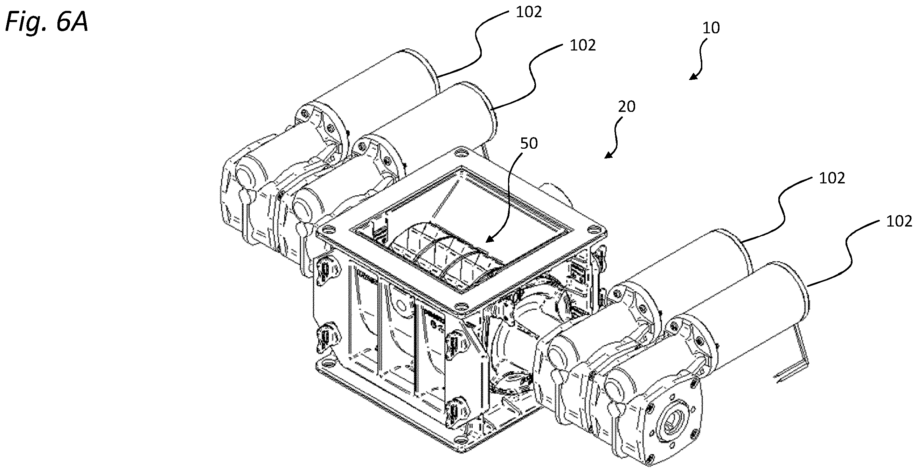

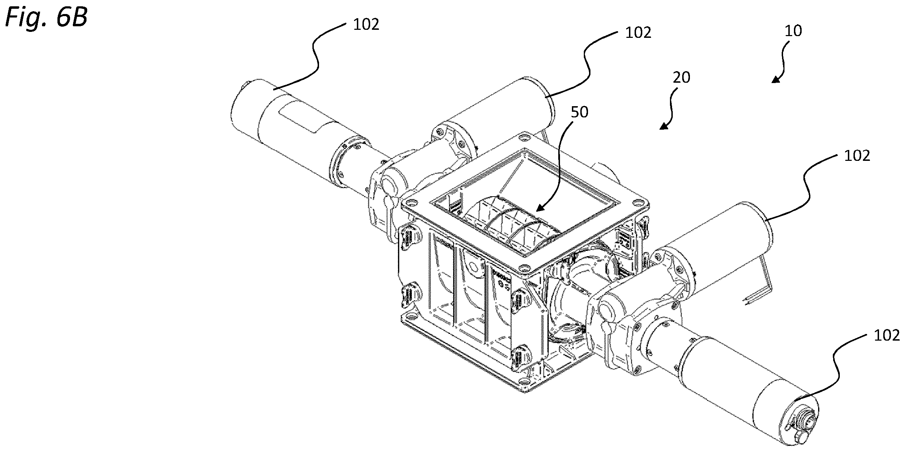

Der Zellenrotor 50 umfasst zumindest einen Rotorabschnitt 54 mit zumindest zwei, jeweils mittels eines separaten Antrieb 102 der Antriebseinheit 100 unabhängig voneinander betreibbaren zueinander konzentrischen Rotorsegmenten 52. Die Antriebe 102 sind zudem jeweils vorzugsweise im Wesentlichen parallel zueinander gelagert. Es ist alternativ oder ergänzend möglich, dass die Antriebe 102 z. B. in einem Winkel zueinander gelagert sind (z. B. Figuren 6A und 6B).

Die Dosiereinrichtung 20 umfasst zweckmäßig zwei Antriebseinheiten 100 mit jeweils zwei Antrieben 102, vorzugsweise jeweils eine Antriebseinheit 100 für jeweils einen Rotorabschnitt 54 wobei jeweils ein Antrieb 102 mit einem Rotorsegment 52 antriebstechnisch gekoppelt ist. Die Antriebseinheiten 100 sind gegenüberliegend zueinander am Gehäuse 22 gelagert, zudem ist gemäß der Ausführungsbeispiele vorgesehen, dass zumindest zwei Antriebe 102 der zwei Antriebeinheiten 100 konzentrisch zueinander gelagert sind. Insbesondere sind die zwei Antriebseinheiten baugleich.

Das Dosiersystem 10 umfasst somit vier, jeweils separat steuerbare Rotorsegmente 52, was somit der Flexibilität von vier separaten Dosiersystemen 10 entspricht, jedoch vom Bauraum nicht größer als bisher übliche Dosiersysteme, respektive Dosiereinrichtungen ist.

Gemäß der Ausführungsbeispiele ist insbesondere vorgesehen, dass zumindest ein Antrieb 102 (respektive zwei Antriebe 102) der Antriebseinheit 100 (respektive der zwei Antriebseinheiten 100) konzentrisch zu zumindest einem Rotorsegment 52 (respektive allen Rotorsegmenten 52) gelagert ist und zumindest ein Antrieb 102 (respektive zwei Antriebe 102) der Antriebseinheit 100 (respektive der zwei Antriebseinheiten 100) nicht koaxial zu zumindest einem Rotorsegment 52 (respektive allen Rotorsegmenten 52) gelagert ist.

Die Antriebe 102 einer Antriebseinheit 100 sind zudem jeweils auf einer gleichen Seite des Gehäuses 22 montiert.

Die jeweils gegenüberliegend am Gehäuse 22 montierten Antriebe 22 können zudem im Betrieb der Dosiereinrichtung 20 unterschiedliche Drehrichtungen zueinander aufweisen.

Die Fallschleuse 150 weist eine identische Anzahl an Einlassöffnungen 152 auf, wie unabhängig voneinander betreibbare Rotorsegmente 52 vorhanden sind, d.h. gemäß der Ausführungsbeispiele vier Einlassöffnungen 152. Wobei die Einlassöffnungen 152 jeweils durch ein Zwischenblech 158, respektive Steuerklappen 156 begrenzt sind (siehe Figur 2C).

Jede Einlassöffnung ist zudem mit zwei Förderleitungen 154 wirktechnisch verbunden, wobei mittels der Steuerklappen 156, vorzugsweise mittels der zwei Steuerklappen 156 jeweils durch entsprechende Verschwenkung der Steuerklappen 156, dass durch die Einlassöffnung dosierte Dosiergut wahlweise in Richtung von einer Förderleitung 154 und/oder in Richtung von zwei Förderleitungen 154 geleitet werden kann. Zur Betätigung der Steuerklappe ist zudem ein Klappmechanismus 160 vorgesehen.

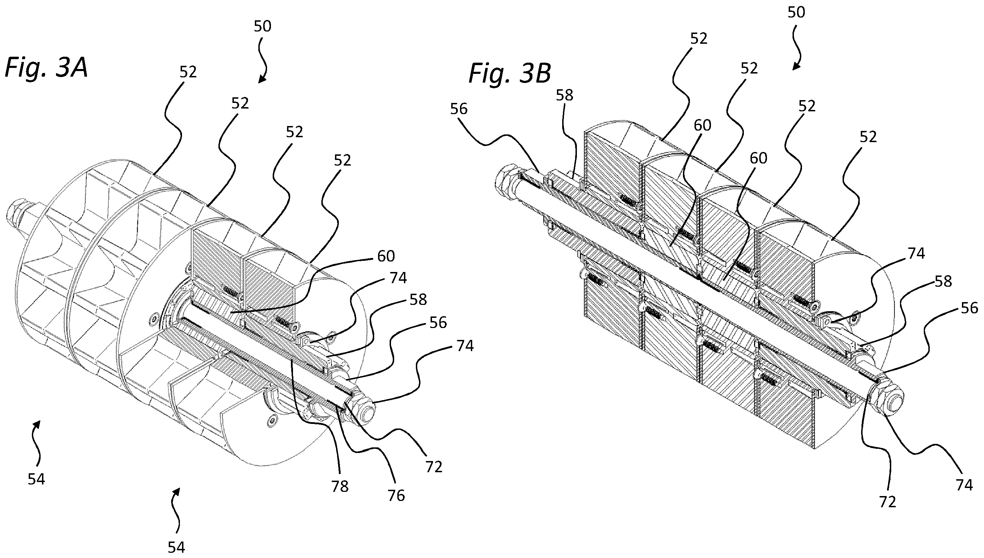

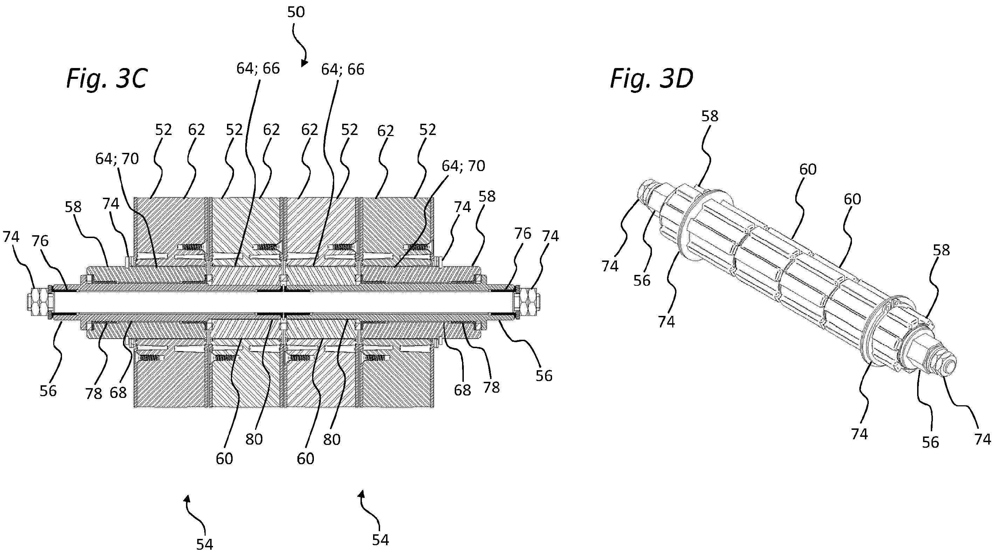

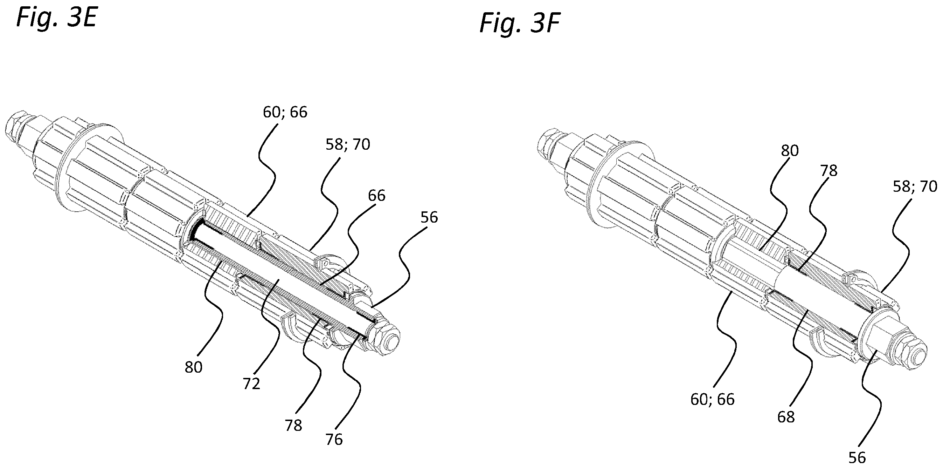

Die Figuren 3 zeigen verschiedene Ansichten einer Ausführungsvariante eines Zellenrotors 50. Wobei die Figur 3A eine Perspektivansicht eines Zellenrotors 50 mit zwei Rotorabschnitte 54 zeigt, bei dem von einem Rotorabschnitt 54 u.a. zwei Rotorsegmente 52, die erste Kupplungsbuchse 56, die zweite Kupplungsbuchse 58, die Übertragungshülse 60 und die Lagerung 76 im Schnitt dargestellt sind. Die Figur 3B zeigt zudem den Zellenrotor 50 gemäß der Figur 3A in einer Perspektivansicht, wobei nun die zwei Rotorabschnitte 54 im Schnitt dargestellt sind, die Figur 3C zeigt zudem die Schnittdarstellung gemäß der Figur 3B in einer Vorderansicht.

Zur Vereinfachung der Montage der Dosiereinrichtung 20, zweckmäßig des Zellenrotors 50, ist es gemäß der Figur 3A möglich, dass die Komponenten zur Koppelung der Rotorsegmente 52 eine vormontierbare Baugruppe ausbilden, wobei die Figur 3D eine Perspektivansicht dieser Komponenten, respektive dieser vormontierbaren Baugruppe zeigt. Die Figur 3E zeigt zudem die Baugruppe gemäß der Figur 3D in einer Perspektivansicht wobei hierbei u.a. die erste Kupplungsbuchse 56, die zweite Kupplungsbuchse 58, die Übertragungshülse 60 und die Lagerung 76 im Schnitt dargestellt sind. Zudem zeigt die Figur 3F eine weitere Schnittdarstellung der Baugruppe gemäß der Figur 3D wobei hierbei u.a. die zweite Kupplungsbuchse 58, die Übertragungshülse 60 und die Lagerung 76 im Schnitt dargestellt sind.

Das Rotorsegment 52 umfasst jeweils zumindest einen Rotorabschnitt 54 mit zumindest zwei unabhängig voneinander betreibbaren zueinander konzentrischen Rotorsegmenten 52, gemäß der Ausführungsbeispiele sind jeweils zwei Rotorabschnitte 54 mit jeweils zwei unabhängig voneinander betreibbaren zueinander konzentrischen Rotorsegmenten 52 vorgesehen.

Die zwei Rotorsegmente 52 eines Rotorabschnittes 54 sind auf einer gemeinsamen ersten Kupplungsbuchse 56 gelagert. Wobei sind gemäß der Ausführungsbeispiele zwischen den Rotorsegmenten 52 und der ersten Kupplungsbuchse 56 zum einen, eine zweite Kupplungsbuchse 58 und zum anderen eine Übertragungshülse 60 sich noch dazwischen befindet.

Der Zellenrotor 22 umfasst somit zweckmäßig zwei Rotorabschnitte 54, welche Rotorabschnitte 54 jeweils mittels der, eine Tragewelle 72 zumindest abschnittweise, gemäß der Ausführungsbeispiele vollständig, umgebenden ersten Kupplungsbuchse 56 auf der Tragewelle 72 gelagert sind. Wobei zur Sicherung von axialen Bewegungen der ersten Kupplungsbuchse 56 gegenüber der Tragewelle 72, respektive der Rotorsegmente 52 gegenüber der ersten Kupplungsbuchse 56 jeweils Sicherungselemente 74 in Form von bspw. Sicherungsringen, Scheiben, Muttern oder dergl. vorgesehen sind.

Die erste Kupplungsbuchse 56 ist zweckmäßig mittels einer Lagerung 76 frei rotierend auf der Tragewelle gelagert, wobei die Lagerung 76 gemäß den Ausführungsbeispielen durch eine Gleitlagerung in Form von zwei Gleitlagern gebildet ist, jedoch bspw. auch durch Kugellager oder dergl. gebildet sein könnte.

Wie aus den Figuren somit hervorgeht, ist ein Rotorsegment 52 mit der ersten Kupplungsbuchse 56 mittelbar (d.h. durch eine Übertagungshülse 60) antriebstechnisch gekoppelt und ein Rotorsegment 52 mit einer zweiten Kupplungsbuchse 58 unmittelbar antriebstechnisch gekoppelt, wobei zudem die erste Kupplungsbuchse 56 und die zweite Kupplungsbuchse 58 konzentrisch zueinander gelagert sind. Zudem ist vorgesehen, dass die zweite Kupplungsbuchse 58 die erste Kupplungsbuchse 56 zumindest abschnittweise umgibt, vorzugsweise vollständig umgibt.

Es ist zudem vorgesehen, dass die zweite Kupplungsbuchse 58 die erste Kupplungsbuchse 56 frei drehend umgibt und die zweite Kupplungsbuchse 58 mittels einer Buchsenlagerung 78 frei rotierend auf der ersten Kupplungsbuchse 56 gelagert ist, vorzugsweise mittels einer, durch zumindest ein Gleitlager, insbesondere zwei Gleitlager, gebildeten Buchsenlagerung 78 auf der ersten Kupplungsbuchse 56 gelagert ist. Wobei neben einer Gleitlagerung auch Kugellager oder dergl. zum Einsatz kommen können.

Zudem ist vorgesehen, dass die zwei Rotorsegmente 52 eines Rotorabschnitt 54 die erste Kupplungsbuchse 56 und/oder die zweite Kupplungsbuchse 58 vollständig umgeben. Wobei gemäß der Ausführungsbeispiele ein Rotorsegment 52 die erste Kupplungsbuchse 56 und die zweite Kupplungsbuchse 58 vollständig umgibt und ein Rotorsegment 52 ausschließlich die erste Kupplungsbuchse 56 vollständig umgibt.

Zur mittelbaren antriebstechnischen Koppelung der ersten Kupplungsbuchse 56 mit dem Rotorsegment 52 ist eine Übertragungshülse 60 vorgesehen. Wobei die Übertragungshülse 60 die erste Kupplungsbuchse 56 umgibt, vorzugsweise vollständig umgibt. Die Übertragungshülse 60 ist zudem eingerichtet, eine identische Drehrichtung der ersten Kupplungsbuchse 56 auf das Rotorsegment 52 zu übertagen.

Eine antriebstechnische Koppelung erfolgt jeweils mittels einer Formschlussverbindung, könnte jedoch alternativ oder ergänzend auch durch eine Kraftschlussverbindung und/oder Stoffschlussverbindung erfolgen. Wobei Formschlussverbindungen wegen der einfacheren Montierbarkeit bevorzugt, eingesetzt werden.

Gemäß der Ausführungsbeispiele ist eine antriebstechnische Koppelung, d.h. eine identische Bewegungsübertragung der ersten Kupplungsbuchse 56 mit der Übertragungshülse 60 und/oder der zweiten Kupplungsbuchse 58 mit einem Rotorsegment 52 und/oder der Übertragungshülse 60 mit einem Rotorsegment 52 vorgesehen, jeweils zweckmäßig mittels einer Formschlussverbindung vorgesehen.

Die Formschlussverbindung wird zweckmäßig jeweils durch korrespondierende Mehrflächenprofilierungen geschaffen. Welche Mehrflächenprofilierungen durch Zahnradprofilierungen und/oder Vierkantprofile und/oder dergl. geschaffen werden.

Wie aus den Figuren 3D bis 3F hervorgeht, weisen die zweite Kupplungsbuchse und die Übertragungshülse jeweils Mehrflächenprofilierungen mit identischem Durchmesser auf, dementsprechend weißt auch eine, durch eine korrespondierende Mehrflächenprofilierung gebildete Innenfläche 64 der Rotorsegmente 52 einen identischen Durchmesser auf. Somit ist es vorzugsweise vorgesehen, dass die Innenfläche 64 zur Schaffung einer Formschlussverbindung zumindest abschnittweise durch eine Mehrflächenprofilierung gebildet ist, die jeweils korrespondierend ist zu einer, wiederum durch eine zumindest abschnittweise durch eine Mehrflächenprofilierung gebildeten Mantelfläche der ersten Kupplungsbuchse 68 und/oder Mantelfläche der zweiten Kupplungsbuchse 70 und/oder Mantelfläche der Übertragungshülse 66.

Zudem ist die Innenkontur 80 der Übertragungshülse 60 zur Schaffung einer Formschlussverbindung zumindest abschnittweise durch eine Mehrflächenprofilierung gebildet, die jeweils korrespondierend ist zu einer, wiederum durch eine zumindest abschnittweise durch eine Mehrflächenprofilierung gebildeten Mantelfläche der ersten Kupplungsbuchse 68.

Die Rotorsegmente 52 weisen jeweils eine identische Umfangsfläche 62 auf, welche eingerichtet ist, Dosiergut aufzunehmen und weiterzuleiten.

Es ist somit vorgesehen, dass die Mantelfläche der ersten Kupplungsbuchse 68 und/oder die Mantelfläche der zweiten Kupplungsbuchse 70 und/oder die Mantelfläche der Übertragungshülse und/oder die Innenfläche 64 der Rotorsegmente 52 einen im wesentlichen identischen Durchmesser aufweisen.

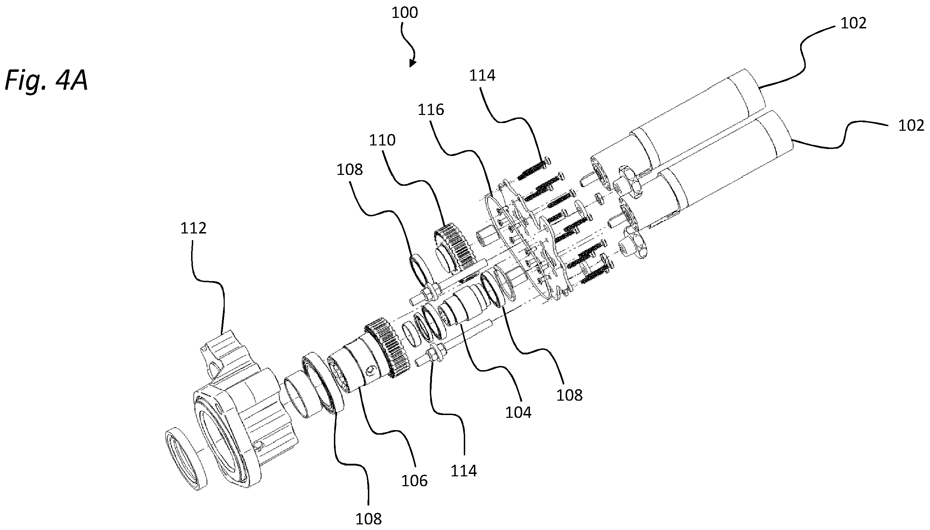

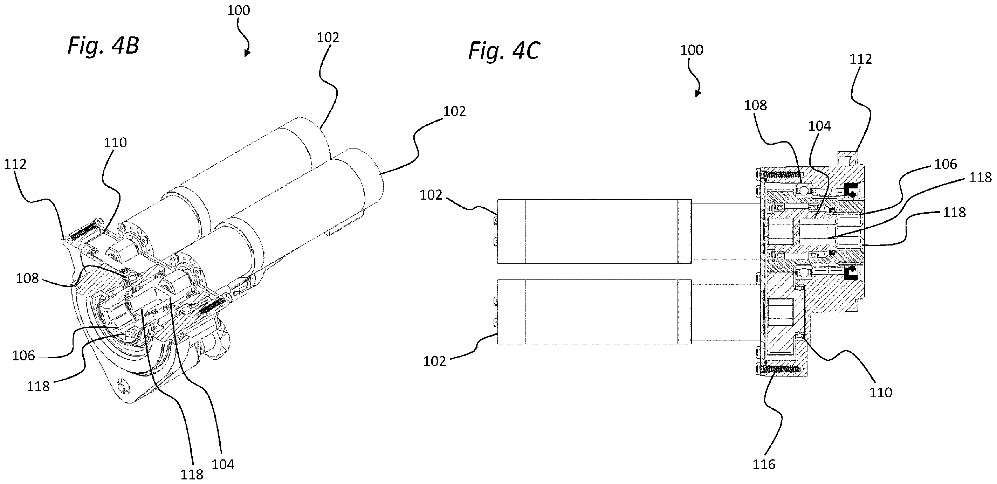

Figur 4 zeigt eine Ausführungsvariante einer Antriebseinheit 100. Wobei die Figur 4A eine perspektive Explosionsdarstellung einer Ausführungsvariante einer Antriebseinheit 100 zeigt, die Figur 4b eine Perspektivansicht der Antriebseinheit 100 gemäß der Figur 4A in montierter Weise zeigt, wobei u.a. eine erste Antriebskupplung 104, eine zweite Antriebskupplung 106, eine Antriebslagerung 108, ein Zwischenglied 110 und ein Antriebsgehäuse 112 im Schnitt dargestellt sind. Die Figur 4C zeigt zudem noch eine Draufsicht der Antriebseinheit 100 gemäß der Figur 4B.

Die Antriebseinheit 100 umfasst zumindest zwei Antriebe 102 die z. B. im Wesentlichen parallel zueinander gelagert sind, zweckmäßig mittels Montageschrauben 114 und Abdichtelementen 116 am Antriebsgehäuse 112 angebaut sind. Es ist alternativ oder ergänzend möglich, dass die Antriebe 102 z. B. in einem Winkel zueinander gelagert sind (z. B. Figuren 6A und 6B).

Um alle Rotorsegmente 52 mit einer identischen Drehrichtung antreiben zu können, ist es möglich, dass die Antriebe 102 im Betrieb der Dosiereinrichtung 20 unterschiedliche Drehrichtungen oder identische Drehrichtungen zueinander aufweisen. Wobei dies wiederum anhand der Kopplung der Antriebe 102 mit dem jeweiligen Rotorsegment 52 variieren kann.

Die Antriebeinheit 100 umfasst zwei Antriebe 102 sowie eine erste Antriebskupplung 104 und eine zweite Antriebskupplung 106, wobei die erste Antriebskupplung 104 und die zweite Antriebskupplung 106 jeweils antriebstechnisch mit einem Antrieb 102 gekoppelt sind.

Die erste Antriebskupplung 104 und die zweite Antriebskupplung 106 sind konzentrisch zueinander gelagert und die zweite Antriebskupplung 106 umgibt die erste Antriebskupplung 104 zumindest abschnittweise, gemäß der Figuren 4B und 4C vollständig. Zweckmäßig ist insbesondere vorgesehen, dass die zweite Antriebskupplung 106 die erste Antriebskupplung 104 frei drehend umgibt und dass die zweite Antriebskupplung 106 mittels einer Antriebslagerung 108 (z.B. gebildet durch Kugellager) frei rotierend auf der ersten Antriebskupplung 104 gelagert ist.

Zur antriebstechnischen Koppelung der zweiten Antriebskupplung 106 mit einem Antrieb 102 ist ein Zwischenglied 110 (z.B. gebildet durch ein Zahnrad) vorgesehen, wobei eine antriebstechnische Koppelung zweckmäßig derartig erfolgt, dass zwischen dem Zwischenglied 110 und der zweiten Antriebskupplung 106 eine Drehrichtungsumkehr durchgeführt wird und/oder eine Drehzahlerhöhung und/oder Drehzahlreduzierung durchgeführt wird.

Zum Antreiben der Rotorsegmente 52 ist vorgesehen, dass die erste Antriebskupplung 104 mit der ersten Kupplungsbuchse 56 und die zweite Antriebskupplung 106 mit der zweiten Kupplungsbuchse 58 antriebstechnisch gekoppelt ist, vorzugsweise jeweils konzentrisch zueinander gekoppelt sind. Wobei die Koppelung vorzugsweise jeweils durch eine Formschlussverbindung erfolgt, insbesondere durch jeweils korrespondierende Mehrflächenprofilierungen erfolgt, wobei die erste Antriebskupplung 104 und die erste Kupplungsbuchse 56 sowie die zweite Antriebskupplung 106 und die zweite Kupplungsbuchse 58 jeweils zueinander identische Durchmesser aufweisende Mehrflächenprofilierungen aufweisen und wobei die erste Antriebskupplung 104 und die zweite Antriebskupplung 106 jeweils verschiedene Durchmesser aufweisende Mehrflächenprofilierungen aufweisen. Die Mehrflächenprofilierungen sind jeweils durch Sechskantabschnitte 118 gebildet.

Die zwei Antriebe 102 sind an einem gemeinsamen Antriebsgehäuse 112 angebaut und die erste Antriebskupplung 104, die zweite Antriebskupplung 106 und das Zwischenglied sind drehbar im Antriebsgehäuse 112 gelagert.

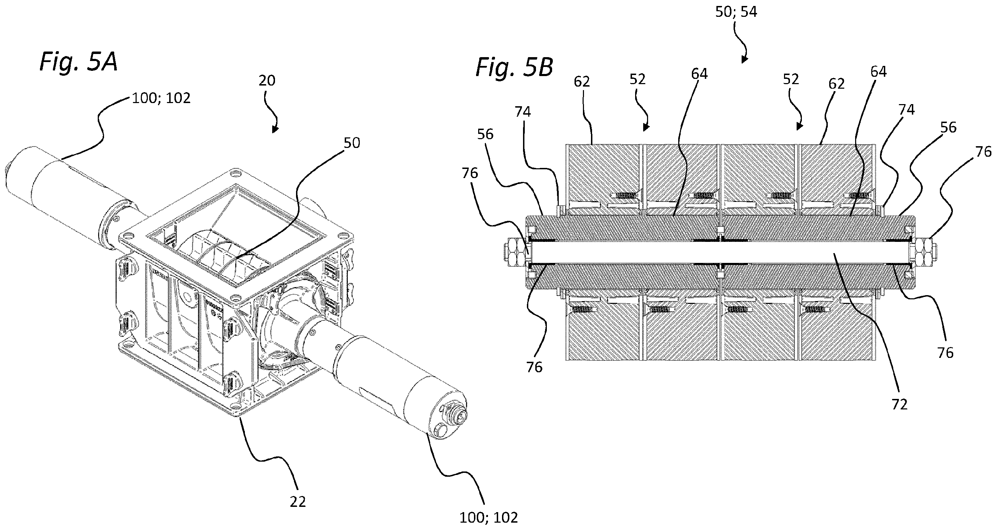

Figur 5 zeigt eine alternative Ausführungsvariante einer Dosiereinrichtung 10. Die Figur 5A zeigt hierbei eine Perspektivansicht einer Dosiereinrichtung mit einem Gehäuse 22, einem innerhalb des Gehäuses 22 rotierenden Zellenrotor 50 und zwei, den Zellenrotor 50 antreibenden Antriebseinheiten 100, die jeweils einen Antrieb 102 umfassen. Die Figur 5B zeigt zudem eine Schnittansicht eines Zellenrotors 50 wie er bspw. bei der Dosiereinrichtung gemäß der Figur 5A eingesetzt werden kann.

Der Zellenrotor 50 umfasst einen Rotorabschnitt 54 mit zumindest zwei, jeweils mittels eines separaten Antriebs 102 der Antriebseinheit 100 unabhängig voneinander betreibbaren, zueinander konzentrischen Rotorsegmenten 52, wobei die Antriebe 102 im Wesentlichen parallel zueinander gelagert sind. Es ist alternativ oder ergänzend möglich, dass die Antriebe 102 z. B. in einem Winkel zueinander gelagert sind (z. B. Figuren 6A und 6B).

Die Dosiereinrichtung 20 umfasst zweckmäßig zwei Antriebseinheiten 100 mit jeweils einem Antrieb 102, wobei jeweils ein Antrieb mit einem Rotorsegment 52 antriebstechnisch gekoppelt ist und die die Antriebseinheiten 100 gegenüberliegend zueinander am Gehäuse gelagert sind, zudem sind die zwei Antriebe 102 der zwei Antriebseinheiten 100 konzentrisch zueinander gelagert.

Die zwei Rotorsegmente 52 des Rotorabschnitt 54 sind jeweils auf einer ersten Kupplungsbuchse 56 gelagert.

Die Rotorsegmente 52 sind jeweils mittels der, eine Tragewelle 72 zumindest abschnittweise, vorzugsweise vollständig umgebenden ersten Kupplungsbuchse 52, auf der Tragewelle 72 gelagert sind und sind vorzugsweise beidseitig mittels Sicherungselementen 76 gegen axiale Bewegungen gegenüber der Tragewelle 72, respektive der ersten Kupplungsbuchse 52 gesichert.

Die erste Kupplungsbuchse 56 ist jeweils mittels einer Lagerung 76 frei rotierend auf der Tragewelle 72 gelagert.

Jedes Rotorsegment 52 ist mit der ersten Kupplungsbuchse 56 unmittelbar antriebstechnisch gekoppelt. Eine antriebstechnische Koppelung erfolgt vorzugsweise mittels einer Formschlussverbindung, zweckmäßig durch jeweils korrespondierende Mehrflächenprofilierungen. Die zwei Rotorsegmente 52 weisen hierfür eine im wesentlichen identische Umfangsfläche 62 auf und eine, vorzugsweise identische durch eine Mehrflächenprofilierung gebildete Innenfläche 64 mit insbesondere identischem Durchmesser auf.

Figur 6A zeigt eine Perspektivansicht einer anderen Ausführungsvariante einer Dosiereinrichtung 20 mit vorzugsweise vier Antrieben 102, wobei die Dosiereinrichtung 20 im Prinzip gemäß einer der bereits erörterten Ausführungsvarianten zweckmäßig ausgebildet sein kann.

Die vorzugsweise vier Antriebe 102 sind im Wesentlichen parallel zueinander gelagert. Die Antriebe 102 sind vorzugsweise im Wesentlichen winklig (z. B. im Wesentlichen orthogonal) zur Rotationsachse des Zellenrotors 50 ausgerichtet.

Figur 6B zeigt eine Perspektivansicht einer anderen Ausführungsvariante einer Dosiereinrichtung 20 mit vorzugsweise vier Antrieben 102, wobei die Dosiereinrichtung 20 im Prinzip gemäß einer der bereits erörterten Ausführungsvarianten zweckmäßig ausgebildet sein kann.

Zumindest zwei der Antriebe 102 sind im Wesentlichen parallel zueinander gelagert und alternativ oder ergänzend im Wesentlichen parallel und/oder im Wesentlichen koaxial zur Rotationsachse des Zellenrotors 50 ausgerichtet.

Zumindest zwei der Antriebe 102 sind im Wesentlichen parallel zueinander gelagert und alternativ oder ergänzend winklig (z. B. im Wesentlichen orthogonal) zur Rotationsachse des Zellenrotors 50 ausgerichtet.

Es ist möglich, dass zumindest ein Antrieb 102 z. B. im Wesentlichen parallel und/oder im Wesentlichen koaxial zur Rotationsachse des Zellenrotors 50 ausgerichtet ist und/oder zumindest ein Antrieb 102 winklig (z. B. im Wesentlichen orthogonal) zur Rotationsachse des Zellenrotors 50 ausgerichtet ist.

Im Kontext der Erfindung sind auch Ausführungsvarianten mit z. B. zumindest zwei Antrieben 102 möglich, die vorzugsweise im Wesentlichen parallel zueinander und/oder in einem Winkel zueinander gelagert sein können.

Im Kontext der Erfindung können z. B. zumindest zwei, zumindest drei, zumindest vier, zumindest fünf oder zumindest sechs Antriebe 102 zur Verfügung gestellt werden.

Obwohl die Erfindung unter Bezugnahme auf bestimmte Ausführungsbeispiele beschrieben worden ist, ist es für einen Fachmann ersichtlich, dass verschiedene Änderungen oder Modifikationen ausgeführt werden können und Äquivalente als Ersatz verwendet werden können, ohne den Bereich der durch die beigefügten Patentansprüche definierten Erfindung zu verlassen.

Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

**Bezugszeichenliste:**

| | | | |
|---|---|---|---|
| 10 | Dosiersystem | 106 | zweite Antriebskupplung |
| 20 | Dosiereinrichtung | 108 | Antriebslagerung |
| 22 | Gehäuse | 110 | Zwischenglied |
| | | 112 | Antriebsgehäuse |
| 50 | Zellenrotor | 114 | Montageschrauben |
| 52 | Rotorsegment | 116 | Abdichtelement |
| 54 | Rotorabschnitt | 118 | Sechskantabschnitt |
| 56 | erste Kupplungsbuchse | | |
| 58 | zweite Kupplungsbuchse | 150 | Fallschleuse |
| 60 | Übertragungshülse | 152 | Einlassöffnung |
| 62 | Umfangsfläche | 154 | Förderleitung |
| 64 | Innenfläche | 156 | Steuerklappe |
| 66 | Mantelfläche Übertragungshülse | 158 | Zwischenblech |
| 68 | Mantelfläche erste Kupplungsbuchse | 160 | Klappmechanismus |
| 70 | Mantelfläche zweite Kupplungsbuchse | | |
| 72 | Tragewelle | 200 | Verteilmaschine, Saatmaschine |
| 74 | Sicherungselement | 202 | Leitungssystem |
| 76 | Lagerung | 204 | Verteilerturm |
| 78 | Buchsenlagerung | 206 | Säschar |
| 80 | Innenkontur | 208 | Vorratsbehälter |
| | | 210 | Rahmenkonstruktion |
| 100 | Antriebseinheit | 212 | Fahrwerk |
| 102 | Antrieb | 214 | Gebläse |
| 104 | erste Antriebskupplung | | |

## Patentansprüche

1. Dosiersystem (10) zum Dosieren von Dosiergut für eine landwirtschaftliche Verteilmaschine (200), insbesondere für eine Saatmaschine oder einen Düngerstreuer, mit
einer Dosiereinrichtung (20), mit zumindest einem Gehäuse (22), einem innerhalb des Gehäuses (22) rotierenden Zellenrotor (50), sowie mit zumindest einer, am Gehäuse (22) montierten, den Zellenrotor (50) antreibenden Antriebseinheit (100), und
- einer, der Dosiereinrichtung (20) stromabwärts nachgelagerten Fallschleuse (150),
wobei der Zellenrotor (50) zumindest einen Rotorabschnitt (54) mit zumindest zwei, jeweils mittels eines separaten Antriebes (102) der Antriebseinheit (100) unabhängig voneinander betreibbare, zueinander konzentrische Rotorsegmente (52) umfasst, und wobei die Antriebe (102) im Wesentlichen parallel zueinander gelagert sind und/oder wobei die Antriebe (102) in einem Winkel zueinander gelagert sind,
- wobei die zumindest zwei Rotorsegmente (52) eines Rotorabschnittes (54) auf einer gemeinsamen ersten Kupplungsbuchse (56) gelagert sind,
- wobei zumindest ein Rotorsegment (52) mit der ersten Kupplungsbuchse (56) mittelbar und/oder unmittelbar antriebstechnisch gekoppelt ist und
- wobei zumindest ein Rotorsegment (52) mit einer zweiten Kupplungsbuchse (58) mittelbar und/oder unmittelbar antriebstechnisch gekoppelt ist, und
- wobei zur mittelbaren antriebstechnischen Koppelung der ersten Kupplungsbuchse (56) mit dem Rotorsegment (52) und/oder der zweiten Kupplungsbuchse (58) mit dem Rotorsegment (52) eine Übertragungshülse (60) vorgesehen ist.

2. Dosiersystem (10) nach Anspruch 1, wobei der Zellenrotor (50) zumindest zwei Rotorabschnitte (54) mit jeweils zumindest zwei unabhängig voneinander betreibbaren, zueinander konzentrische Rotorsegmente (52) umfasst.

3. Dosiersystem (10) nach Anspruch 2, wobei die Dosiereinrichtung (20) zwei Antriebseinheiten (100) mit jeweils zwei Antrieben (102) umfasst, vorzugsweise jeweils eine Antriebseinheit (100) für jeweils einen Rotorabschnitt (54) umfasst,
- wobei jeweils ein Antrieb (102) mit einem Rotorsegment (52) antriebstechnisch gekoppelt ist, und/oder
- wobei die Antriebseinheiten (100) gegenüberliegend zueinander am Gehäuse (22) gelagert sind, und/oder
- wobei zumindest zwei Antriebe (102) der zwei Antriebseinheiten (100) konzentrisch zueinander gelagert sind.

4. Dosiersystem (10) nach einem der vorherigen Ansprüche, wobei
- zumindest ein Antrieb (102) der Antriebseinheit (100) konzentrisch zu zumindest einem Rotorsegment (52) gelagert ist und
- zumindest ein Antrieb (102) der Antriebseinheit (100) nicht koaxial zu zumindest einem Rotorsegment (52) gelagert ist.

5. Dosiersystem (10) nach einem der vorherigen Ansprüche, wobei die Antriebe (102) einer Antriebseinheit (100) jeweils auf der gleichen Seite des Gehäuses (22) montiert sind.

6. Dosiersystem (10) nach einem der vorherigen Ansprüche, wobei
- der Zellenrotor (50) zumindest zwei Rotorabschnitte (54) umfasst und
- die Rotorabschnitte (54) jeweils mittels der, eine Tragewelle (72) zumindest abschnittweise, vorzugsweise vollständig, umgebenden ersten Kupplungsbuchse (56) auf der Tragewelle (72) gelagert sind und/oder
- vorzugsweise beidseitig mittels Sicherungselementen (74) gegen axiale Bewegungen gegenüber der Tragewelle (72) gesichert sind.

7. Dosiersystem (10) nach Anspruch 6, wobei die erste Kupplungsbuchse (56) mittels einer Lagerung (76) frei rotierend auf der Tragewelle (72) gelagert ist.

8. Dosiersystem (10) nach einem der vorherigen Ansprüche,
- wobei die erste Kupplungsbuchse (56) und die zweite Kupplungsbuchse (58) konzentrisch zueinander gelagert sind.

9. Dosiersystem (10) nach einem der vorherigen Ansprüche, wobei die zweite Kupplungsbuchse (58) die erste Kupplungsbuchse (56) zumindest abschnittweise umgibt, vorzugsweise vollständig umgibt.

10. Dosiersystem (10) nach einem der vorherigen Ansprüche,
- wobei die zweite Kupplungsbuchse (58) die erste Kupplungsbuchse (56) frei drehend umgibt und/oder
- wobei die zweite Kupplungsbuchse (58) mittels einer Buchsenlagerung (78) frei rotierend auf der ersten Kupplungsbuchse (56) gelagert ist.

11. Dosiersystem (10) nach einem der vorherigen Ansprüche,
- wobei die zwei Rotorsegmente (52) eines Rotorabschnitt (54) die erste Kupplungsbuchse (56) und/oder die zweite Kupplungsbuchse (58) umgeben,
- vorzugsweise ein Rotorsegment (52) die erste Kupplungsbuchse (56) und die zweite Kupplungsbuchse (58) vollständig umgibt und ein Rotorsegment (52) ausschließlich die erste Kupplungsbuchse (56) oder die zweite Kupplungsbuchse (58) vollständig umgibt.

12. Dosiersystem (10) nach einem der vorherigen Ansprüche, wobei die Übertragungshülse (60) die erste Kupplungsbuchse (56) und/oder die zweite Kupplungsbuchse (58) umgibt, vorzugsweise vollständig umgibt.

13. Dosiersystem (10) nach einem der vorherigen Ansprüche, wobei die Übertragungshülse (60) eingerichtet ist, eine identische Drehrichtung der ersten Kupplungsbuchse (56) auf das Rotorsegment (52) zu übertagen und/oder eine identische Drehrichtung der zweiten Kupplungsbuchse (58) auf das Rotorsegment (52) zu übertragen.

14. Dosiersystem (10) nach einem der vorherigen Ansprüche, wobei eine antriebstechnische Koppelung, mittels einer Kraftschlussverbindung und/oder einer Formschlussverbindung erfolgt.

15. Landwirtschaftliche Verteilmaschine (200), vorzugsweise Saatmaschine oder Düngerstreuer, mit zumindest einem Dosiersystem (10) nach zumindest einem der vorherigen Ansprüche, wobei das Dosiersystem (10), mittels Förderleitungen (154) und einem mit einem pneumatischen Luftdruck beaufschlagbaren Leitungssystem (202) mit zumindest einem Verteilerturm (204) zur Verteilung des Dosiergut auf eine Vielzahl von Säscharen (206) wirktechnisch verbunden ist und die Säschare (206) eingerichtet sind, dass Dosiergut in einer Bodenfläche abzulegen.

16. Verteilmaschine nach Anspruch 15, wobei diese zumindest zwei Vorratsbehälter (208) für landwirtschaftliches Dosiergut, zumindest zwei Dosiersysteme (10) und zwei Verteilertürme (204), welche jeweils mit einem Leitungssystem (202) mit zumindest einem, vorzugsweise zwei Dosiersysteme (10) verbunden sind, aufweist.

## Claims

1. Metering system (10) for metering of metering material for an agricultural distributing machine (200), in particular for a seed drill or a fertilizer spreader, having
a metering device (20) which has at least one housing (22), one cell rotor (50) rotating within the housing (22), and has at least one drive unit (100) fitted to the housing (22) and driving the cell rotor (50), and
- a drop chute (150) which is arranged downstream of the metering device (20),
wherein the cell rotor (50) comprises at least one rotor section (54) having at least two mutually concentric rotor segments (52), said rotor segments being operable independently of one another in each case by means of a separate drive (102) of the drive unit (100), and wherein the drives (102) are mounted substantially parallel to one another, and/or wherein the drives (102) are mounted at an angle to one another,
- wherein the at least two rotor segments (52) of a rotor section (54) are mounted on a common first coupling bushing (56),
- wherein at least one rotor segment (52) is coupled in terms of drive directly and/or indirectly to the first coupling bushing (56), and
- wherein at least one rotor segment (52) is coupled in terms of drive directly and/or indirectly to a second coupling bushing (58), and
- wherein a transmission sleeve (60) is provided for indirect coupling in terms of drive of the first coupling bushing (56) to the rotor segment (52) and/or of the second coupling bushing (58) to the rotor segment (52).

2. Metering system (10) according to Claim 1, wherein the cell rotor (50) comprises at least two rotor sections (54) having in each case at least two mutually concentric rotor segments (52) which are operable independently of one another.

3. Metering system (10) according to Claim 2, wherein the metering device (20) comprises two drive units (100) having in each case two drives (102), preferably comprises one drive unit (100) for each respective rotor section (54),
- wherein a drive (102) is coupled in terms of drive to a rotor segment (52) in each case, and/or
- wherein the drive units (100) are mounted on the housing (22) so as to be situated opposite one another, and/or
- wherein at least two drives (102) of the two drive units (100) are mounted concentrically in relation to one another.

4. Metering system (10) according to one of the preceding claims, wherein
- at least one drive (102) of the drive unit (100) is mounted concentrically in relation to at least one rotor segment (52), and
- at least one drive (102) of the drive unit (100) is not mounted coaxially in relation to at least one rotor segment (52).

5. Metering system (10) according to one of the preceding claims, wherein the drives (102) of a drive unit (100) are each fitted on the same side of the housing (22).

6. Metering system (10) according to one of the preceding claims, wherein
- the cell rotor (50) comprises at least two rotor sections (54), and
- the rotor sections (54) are mounted on a supporting shaft (72) in each case by means of the first coupling bushing (56), which surrounds the supporting shaft (72) at least partially, preferably completely, and/or
- are secured, preferably on both sides, against axial movements in relation to the supporting shaft (72) by means of securing elements (74).

7. Metering system (10) according to Claim 6, wherein the first coupling bushing (56) is mounted in a freely rotating manner on the supporting shaft (72) by means of a bearing arrangement (76).

8. Metering system (10) according to one of the preceding claims,
- wherein the first coupling bushing (56) and the second coupling bushing (58) are mounted concentrically in relation to one another.

9. Metering system (10) according to one of the preceding claims, wherein the second coupling bushing (58) at least sectionally surrounds, preferably completely surrounds, the first coupling bushing (56).

10. Metering system (10) according to one of the preceding claims,
- wherein the second coupling bushing (58) surrounds the first coupling bushing (56) in a freely rotating manner, and/or
- wherein the second coupling bushing (58) is mounted in a freely rotating manner on the first coupling bushing (56) by means of a bushing bearing arrangement (78).

11. Metering system (10) according to one of the preceding claims,
- wherein the two rotor segments (52) of a rotor section (54) surround the first coupling bushing (56) and/or the second coupling bushing (58),
- preferably one rotor segment (52) completely surrounds the first coupling bushing (56) and the second coupling bushing (58) and one rotor segment (52) completely surrounds exclusively the first coupling bushing (56) or the second coupling bushing (58).

12. Metering system (10) according to one of the preceding claims, wherein the transmission sleeve (60) surrounds, preferably completely surrounds, the first coupling bushing (56) and/or the second coupling bushing (58).

13. Metering system (10) according to one of the preceding claims, wherein the transmission sleeve (60) is configured to transmit an identical direction of rotation of the first coupling bushing (56) to the rotor segment (52) and/or to transmit an identical direction of rotation of the second coupling bushing (58) to the rotor segment (52).

14. Metering system (10) according to one of the preceding claims, wherein a coupling in terms of drive is realized by means of a force-fitting connection and/or a form-fitting connection.

15. Agricultural distributing machine (200), preferably a seed drill or fertilizer spreader, having at least one metering system (10) according to at least one of the preceding claims, wherein the metering system (10), by means of conveying lines (154) and a line system (202) which is able to be subjected to a pneumatic air pressure, is connected operatively to at least one distributor tower (204) for distributing the metering material to a plurality of seed coulters (206), and the seed coulters (206) are configured to deposit the metering material in a ground area.

16. Distributing machine according to Claim 15, wherein said distributing machine has at least two storage containers (208) for agricultural metering material, at least two metering systems (10) and two distributor towers (204), which are connected in each case by way of a line system (202) to at least one, preferably two, metering systems (10).

## Revendications

1. Système de dosage (10) pour doser un produit à doser pour une machine de distribution agricole (200), en particulier pour un semoir ou un épandeur d'engrais, avec un dispositif de dosage (20) avec au moins un boîtier (22), un rotor cellulaire (50) tournant à l'intérieur du boîtier (22), et au moins une unité d'entraînement (100) montée sur le boîtier (22), entraînant le rotor cellulaire (50), et
- un sas de chute (150) monté en aval du dispositif de dosage (20),
le rotor cellulaire (50) comprenant au moins une section de rotor (54) avec au moins deux segments de rotor (52) concentriques l'un par rapport à l'autre pouvant chacun fonctionner indépendamment l'un de l'autre au moyen d'un entraînement (102) séparé de l'unité d'entraînement (100), les entraînements (102) étant montés sensiblement parallèlement l'un à l'autre et/ou les entraînements (102) étant montés selon un angle l'un par rapport à l'autre,
- les au moins deux segments de rotor (52) d'une section de rotor (54) étant montés sur une première douille d'accouplement (56) commune,
- au moins un segment de rotor (52) étant couplé indirectement et/ou directement par entraînement à la première douille d'accouplement (56), et
- au moins un segment de rotor (52) étant couplé indirectement et/ou directement par entraînement à une deuxième douille d'accouplement (58), et
- un manchon de transmission (60) étant prévu pour l'accouplement indirect par entraînement de la première douille d'accouplement (56) au segment de rotor (52) et/ou de la deuxième douille d'accouplement (58) au segment de rotor (52).

2. Système de dosage (10) selon la revendication 1, le rotor cellulaire (50) comprenant au moins deux sections de rotor (54) avec chacune au moins deux segments de rotor (52) concentriques l'un par rapport à l'autre pouvant fonctionner indépendamment l'un de l'autre.

3. Système de dosage (10) selon la revendication 2, le dispositif de dosage (20) comprenant deux unités d'entraînement (100) avec respectivement deux entraînements (102), de préférence respectivement une unité d'entraînement (100) pour respectivement une section de rotor (54),
- respectivement un entraînement (102) étant couplé par entraînement à un segment de rotor (52), et/ou
- les unités d'entraînement (100) étant montées sur le boîtier (22) en vis-à-vis l'une de l'autre, et/ou
- au moins deux entraînements (102) des deux unités d'entraînement (100) étant montés concentriquement l'un par rapport à l'autre.

4. Système de dosage (10) selon l'une des revendications précédentes,
- au moins un entraînement (102) de l'unité d'entraînement (100) étant monté concentriquement par rapport à au moins un segment de rotor (52), et
- au moins un entraînement (102) de l'unité d'entraînement (100) n'étant pas monté coaxialement par rapport à au moins un segment de rotor (52).

5. Système de dosage (10) selon l'une des revendications précédentes, les entraînements (102) d'une unité d'entraînement (100) étant montés chacun sur le même côté du boîtier (22).

6. Système de dosage (10) selon l'une des revendications précédentes,
- le rotor cellulaire (50) comprenant au moins deux sections de rotor (54) et
- les sections de rotor (54) étant chacune montées sur l'arbre de support (72) au moyen de la première douille d'accouplement (56) entourant au moins par sections, de préférence totalement, un arbre de support (72), et/ou
- étant de préférence bloquées des deux côtés contre des mouvements axiaux par rapport à l'arbre de support (72) au moyen d'éléments de blocage (74).

7. Système de dosage (10) selon la revendication 6, la première douille d'accouplement (56) étant montée en rotation libre sur l'arbre de support (72) au moyen d'un palier (76).

8. Système de dosage (10) selon l'une des revendications précédentes,
- la première douille d'accouplement (56) et la deuxième douille d'accouplement (58) étant montées concentriquement l'une par rapport à l'autre.

9. Système de dosage (10) selon l'une des revendications précédentes, la deuxième douille d'accouplement (58) entourant au moins par sections, de préférence totalement, la première douille d'accouplement (56).

10. Système de dosage (10) selon l'une des revendications précédentes,
- la deuxième douille d'accouplement (58) entourant la première douille d'accouplement (56) de manière à pouvoir tourner librement et/ou
- la deuxième douille d'accouplement (58) étant montée en rotation libre sur la première douille d'accouplement (56) au moyen d'un palier de douille (78).

11. Système de dosage (10) selon l'une des revendications précédentes,
- les deux segments de rotor (52) d'une section de rotor (54) entourant la première douille d'accouplement (56) et/ou la deuxième douille d'accouplement (58),
- de préférence, un segment de rotor (52) entourant totalement la première douille d'accouplement (56) et la deuxième douille d'accouplement (58) et un segment de rotor (52) entourant totalement exclusivement la première douille d'accouplement (56) ou la deuxième douille d'accouplement (58).

12. Système de dosage (10) selon l'une des revendications précédentes, le manchon de transmission (60) entourant, de préférence totalement, la première douille d'accouplement (56) et/ou la deuxième douille d'accouplement (58).

13. Système de dosage (10) selon l'une des revendications précédentes, le manchon de transmission (60) étant mis au point pour transmettre une direction de rotation identique de la première douille d'accouplement (56) au segment de rotor (52) et/ou pour transmettre une direction de rotation identique de la deuxième douille d'accouplement (58) au segment de rotor (52).

14. Système de dosage (10) selon l'une des revendications précédentes, un accouplement par entraînement étant effectué au moyen d'une liaison à force et/ou d'une liaison par complémentarité de forme.

15. Machine de distribution agricole (200), de préférence semoir ou épandeur d'engrais, avec au moins un système de dosage (10) selon au moins l'une des revendications précédentes, le système de dosage (10) étant relié fonctionnement à au moins une tour de distribution (204) destinée à distribuer le produit à doser sur une pluralité de socs pour semoir (206) au moyen de conduites de transport (154) et d'un système de conduite (202) pouvant être soumis à l'action d'air pressurisé et les socs pour semoir (206) étant mis au point pour déposer du produit à doser sur une surface au sol.

16. Machine de distribution selon la revendication 15, ladite machine de distribution comportant au moins deux contenants de stockage (208) pour du produit à doser agricole, au moins deux systèmes de dosage (10) et deux tours de distribution (204), qui sont reliés chacun à un système de conduite (202) avec au moins un, de préférence deux systèmes de dosage (10).
